# FASCICULE DE BREVET EUROPEEN

(11) **EP 3 132 123 B1**
(45) Date de publication et mention de la délivrance du brevet: **09.09.2020**
(21) Numéro de dépôt: 15720387.8
(22) Date de dépôt: 14.04.2015
(51) Int. Cl.: F01D 25/18, F04D 29/057, F04C 2/08, F02C 7/236

(54) **POMPE À ENGRENAGES À CARBURANT, PRÉVUE NOTAMMENT COMME POMPE À HAUTE PRESSION**
KRAFTSTOFFGETRIEBEPUMPE ZUR VERWENDUNG, IM BESONDEREN, ALS HOCHDRUCKPUMPE
FUEL GEAR PUMP INTENDED, IN PARTICULAR, AS A HIGH-PRESSURE PUMP

(30) Priorité: 15.04.2014 FR 1453372
(43) Date de publication de la demande: 22.02.2017
(73) Titulaire: SAFRAN AIRCRAFT ENGINES, 75015 Paris (FR)
(72) Inventeur: VERTENOEUIL, Philippe, 77550 Moissy-Cramayel Cedex (FR); WAISSI, Bellal, 77550 Moissy-Cramayel Cedex (FR)
(74) Mandataire: Brevalex
(86) Numéro de dépôt international: PCT/FR2015/051001
(87) Numéro de publication internationale: WO 2015/159018

(56) Documents cités:
- US-A- 3 528 756
- US-A- 3 574 492
- US-A- 4 787 332
- US-A1- 2014 003 987

## Description

Le sujet de l'invention présente est une pompe à engrenages prévue notamment comme pompe à haute pression à carburant, sans que d'autres applications soient exclues.

Les moteurs d'avions comprennent une pompe principale à carburant, qui est au cœur de leur système de régulation. Elle permet d'alimenter en carburant la chambre de combustion, en pompant le débit nécessaire depuis les réservoirs. On se sert également du débit qu'elle délivre comme fluide hydraulique pour actionner des vérins, comme ceux servant à ouvrir les portes de décharge du débit d'air de la veine primaire vers la veine secondaire du moteur.

Cette pompe peut comporter deux étages, une pompe à basse pression, et une pompe à haute pression sur laquelle porte alors plus précisément l'invention. Ces deux étages ont une fonction distincte : le premier délivre une élévation de pression à débit imposé, le second un débit à un écart de pression imposé à ses bornes. Ces deux étages sont le plus souvent intégrés dans un même carter, pour des raisons d'économie d'espace et de simplification du moteur, et constituent un seul équipement, entraîné à la même vitesse par un même arbre. Une pompe à carburant à deux étages, illustrant un état existant de la technique, est le sujet de US 2014/003987 A1.

La technologie la plus utilisée actuellement pour l'étage à basse pression est une pompe centrifuge à rouet aubagé. Une telle pompe présente des caractéristiques d'élévation de pression qui dépendent fortement du régime de rotation.

La technologie la plus utilisée actuellement pour l'étage à haute pression est une pompe à engrenages à cylindrée fixe. Son débit est donc proportionnel à son régime de rotation, au rendement volumique près. Cette technologie, utilisée pour sa grande fiabilité, implique un excédent de débit pompé à certains régimes de vol, où le régime de rotation est élevé alors qu'il n'y a plus besoin de débit, ni vers l'injection dans la chambre de combustion, ni vers les actionneurs. Ce débit excédentaire est alors retourné vers l'amont de la pompe à haute pression.

Les nouveaux développements des moteurs ont souvent pour but de réduire la consommation de carburant, au moyen d'une réduction de toutes les pertes d'énergie. On cherche ainsi, conformément à un but de l'invention, à réduire fortement l'écart de pression aux bornes de la pompe à haute pression, voire à l'annuler, en se reposant donc uniquement sur la pompe à basse pression pour assurer l'élévation de pression nécessaire. La pompe à haute pression servirait seulement à assurer le débit souhaité. Les économies attendues consisteraient d'une part en une réduction de puissance nécessaire pour entraîner l'arbre de la pompe, et d'autre part en une simplification de la pompe, comprenant notamment une diminution de la cylindrée, puisque la diminution, ou la suppression de l'élévation de pression dont elle est le siège, diminuera forcément les fuites en son sein.

Malgré ces avantages redevables à la diminution ou à la suppression de l'écart de pression, les pompes à engrenages à haute pression devront recevoir des modifications de conception, qui sont autant d'aspects de l'invention, puisque cet écart de pression entre l'entrée et la sortie de la pompe est exploité pour assurer son fonctionnement correct. En effet, les paliers de la pompe doivent être lubrifiés, et cela est généralement fait par le fluide pompé même, comme on l'expose par exemple dans le document US 3 528 756 A : une recirculation du fluide pompé est établie entre le côté de sortie et le côté d'entrée en passant par des rainures creusées sur le palier, de sorte que la différence de pression entre la sortie et l'entrée du fluide force un débit de recirculation à travers ce passage, qui assure le maintien d'une couche de lubrification entre le palier et les queues (bouts d'axes) des pignons qu'ils soutiennent. Le débit de recirculation n'est toutefois plus assuré quand la pression entre les deux côtés de la pompe diminue et à plus forte raison devient négligeable. Indépendamment de ce débit, le fluide en recirculation peut se trouver à une pression trop faible pour maintenir l'appui hydrodynamique des axes des pignons malgré les oscillations - inévitables - de ces pièces tournantes : les axes peuvent alors heurter de manière répétée les paliers en rompant la couche hydrodynamique, et les endommager.

Une autre difficulté est relative à une autre recirculation, qui doit elle être évitée et concerne les fuites du liquide pompé par l'engrenage sur les côtés de l'engrenage, une portion du fluide pompé revenant au côté d'entrée. Il est nécessaire de réduire fortement les jeux latéraux sur les côtés de l'engrenage, afin de réduire cette recirculation néfaste. On y parvient usuellement par un montage flottant d'un des paliers de chacun des pignons de l'engrenage, consistant en un jeu entre le pourtour extérieur de ce palier et le carter de la pompe, qui permet à ce palier mobile de glisser en direction axiale et d'effectuer ce qu'on appelle un pincement de l'engrenage. La face des paliers mobiles qui est axiale extérieure (la plus éloignée des pignons) est alors mise en communication à la pression du côté de sortie de la pompe par des perçages ménagés pour cela à travers la pompe, ce qui crée une résultante des forces de pression repoussant les paliers mobiles vers les pignons. Ici encore, cette force de pincement de l'engrenage devient insuffisante si la surpression aux bornes de la pompe diminue. Enfin, une autre recirculation néfaste du fluide de la haute pression vers la basse pression apparaît autour des dents des pignons de l'engrenage en l'absence de surpression importante, en l'absence d'une résultante de force transversale aux axes de pignons, qui presse les dents des pignons proches du côté à basse pression sur la paroi circulaire du carter environnant.

Les défauts de lubrification dans les paliers sont évités dans la pompe décrite par le document US 4 787 332 A, où des barrages étanches sont établis entre la cavité des pignons, traversée par le fluide pompé, et des cavités latérales englobant les paliers. Un autre fluide, spécialement apte à réaliser la lubrification des paliers, est injecté dans ces cavités latérales. Ce document est relatif à une pompe à mastic ou un autre adhésif, qui est un fluide complètement différent d'un carburant et en particulier inapte à assurer la lubrification.

Les différents écueils consécutifs à des défauts de recirculation du fluide pompé sont évités avec l'invention.

Selon un premier aspect, celle-ci concerne une pompe à engrenages à carburant, comprenant un carter, deux pignons engrenant entre eux dans une chambre du carter, deux premiers paliers, soutenant respectivement des premiers bouts d'axes des pignons, deux seconds paliers, soutenant respectivement des seconds bouts d'axes des pignons, les premiers paliers et les seconds paliers étant logés dans la chambre du carter, les premiers bouts d'axes tourillonnant dans les premiers paliers avec des premiers jeux et les seconds bouts d'axes tourillonnant dans les seconds paliers avec des seconds jeux, les premiers et les seconds jeux accueillant des couches de fluide de support hydrodynamique, caractérisée en ce qu'elle comprend des garnitures d'étanchéité entre les seconds paliers et les pignons, lesdites garnitures isolant des cavités closes englobant les seconds jeux et délimitées par le carter, les seconds paliers et les pignons, les cavités closes contenant un fluide ayant une viscosité plus grande qu'un fluide, qui est un carburant, pompé par les pignons.

La justification de cet aspect de l'invention est la suivante. La lubrification par sustentation hydrodynamique est nécessaire dans ce genre de pompes pour des raisons de sécurité ou de durée de service, la lubrification statique sur des paliers à surface lisse ou poreuse étant exclue, mais la sustentation hydrodynamique, quand elle est faite par une recirculation du fluide pompé à l'intérieur de la pompe selon la conception ordinaire, peut pourtant devenir insuffisante si la surpression aux bornes de la pompe est trop faible. En particulier, les oscillations des axes de pignons, menant à des battements sur les paliers, ne seraient plus amorties suffisamment. On a toutefois établi ici que la sustentation hydrodynamique par recirculation restait acceptable pour satisfaire aux raisons ci-dessus si elle était appliquée et assurée sur un seul des paliers de chacun des pignons, appelés ici premiers paliers.

Les seconds paliers doivent être lubrifiés de même que les premiers paliers. De manière générale, la lubrification assure à la fois la durée de service en limitant les usures et évacuant la chaleur, mais également la stabilité des pignons en rotation contre les oscillations de leur axe grâce à l'amortissement inhérent à toute couche fluide relativement raide. Afin d'assurer la lubrification et la stabilité des pignons en rotation, et donc éviter tout battement du pignon en rotation dans les paliers, les seconds paliers utilisent une première innovation de l'invention décrite ci-après. Il est considéré ici que la stabilité du pignon peut être assurée grâce aux seconds paliers seuls, du fait des très faibles jeux en fonctionnement dans la pompe. Pour les premiers paliers, comme il ne s'agit alors plus que d'assurer la lubrification pour assurer la durée de vie, une autre innovation moins complexe peut être mise en place, qui implique simplement une nouvelle recirculation innovante, décrite plus loin et qui garantit le maintien de la sustentation hydrodynamique même sans différence de pression aux bornes de la pompe. Les seconds paliers peuvent alors exercer une sustentation hydrodynamique sans recirculation au moyen d'un fluide contenu dans des cavités closes, qui est choisi différent du carburant et avec des propriétés, avant tout de viscosité, lui permettant de créer la couche de sustentation hydrodynamique plus facilement que le fluide pompé, si par exemple il est rhéo-épaississant. Les fluides rhéo-épaississants ont la propriété de former cette couche pour tous les régimes de rotation des pignons de la pompe, même en l'absence de surpression aux bornes de la pompe. Un soutien suffisant des pignons de l'engrenage est donc réalisé à l'aide seulement des seconds paliers associés aux cavités closes, même en présence d'oscillations, alors que la recirculation à travers les premiers paliers, qui est garantie dès que la pompe délivre un débit en surpression, apporte la sécurité de fonctionnement nécessaire.

Un deuxième aspect de l'invention est relatif au rétablissement du pincement des pignons en direction axiale, afin d'éviter les recirculations du fluide pompé devant leur face latérale, même si la surpression aux bornes de la pompe est insuffisante pour produire ce pincement.

Selon le deuxième aspect de l'invention, des ressorts sont comprimés entre le carter et des faces axiales extérieures, éloignées des pignons, des seconds paliers ; les ressorts s'étendent sur des portions opposées de circonférence desdites faces et exercent donc une résultante d'efforts plus importante pour renforcer ainsi un pincement des pignons entre leurs paliers, essentiel pour réduire les fuites de recirculation au sein de la pompe. On verra que cette disposition des ressorts est absente de pompes connues de ce genre.

Ainsi qu'on l'a vu, l'invention prend tout son sens avec des pompes subissant une surpression faible ou même nulle. Or la recirculation à travers les premiers paliers n'est plus assurée si cette surpression devient trop basse. Cette situation se produit, dans le cas des circuits d'alimentation en carburant, quand la pompe à engrenages est en aval d'autres pompes, qui produisent une surpression du fluide. Il est alors possible de créer, à travers les premiers paliers de la présente pompe, un trajet de recirculation sortant de la pompe et aboutissant à une région à basse pression du circuit d'alimentation. En utilisant à la fois le fluide pompé pour réaliser la recirculation et une zone de faible pression déjà présente dans le dispositif pour générer le débit, on évite les inconvénients d'un circuit de pompage complètement autonome et d'un fluide différent du fluide pompé.

L'invention sera maintenant décrite en détail dans ses différents aspects, caractéristiques et avantages, y compris ceux qui ont été indiqués ci-dessus et d'autres, au moyen des figures suivantes :
- la figure 1 est une vue générale d'un dispositif dans lequel la pompe de l'invention peut être placée ;
- les figures 2, 3, 4, 5 et 6 sont diverses vues d'une pompe connue, du genre que l'invention perfectionne ;
- la figure 7 illustre une première modification, caractéristique de l'invention, de cette pompe ;
- les figures 8A, 8B, 8C, 8D et 9 explicitent l'intérêt de cette modification ;
- et les figures 10 et 11 illustrent d'autres modifications caractéristiques de l'invention.

On recourt maintenant à la description des premières figures.

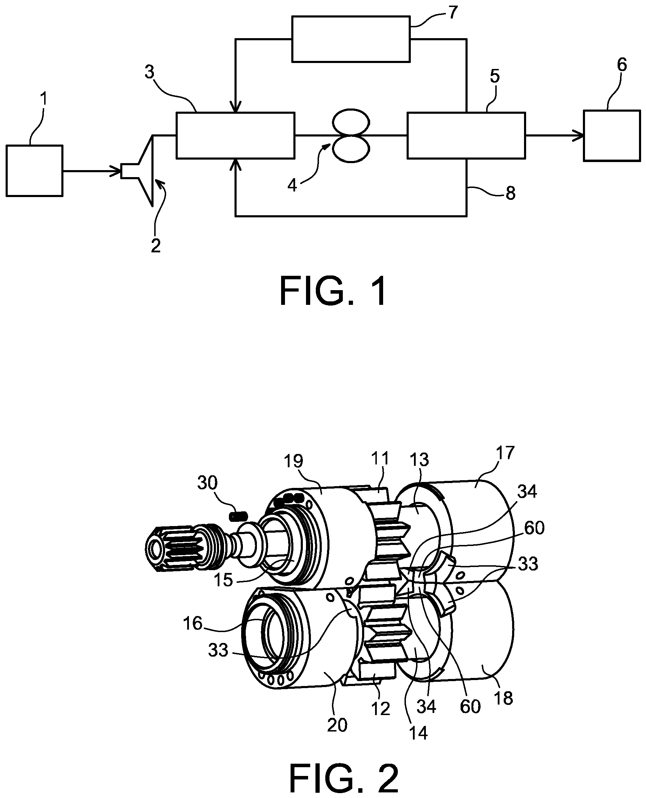

La figure 1 représente un circuit du carburant d'un moteur d'avion. Un réservoir 1 d'un avion alimente une pompe à basse pression 2, puis, par des filtres et échangeurs 3, une pompe à haute pression 4. Le carburant mis sous pression est fourni à un doseur 5, qui alimente une chambre de combustion 6 des actionneurs et servo-valves 7 ; le débit excédentaire retourne en amont de la pompe à haute pression 4 par une canalisation de retour 8, et, de même, le fluide utilisé dans les actionneurs et servo-valves 7.

Ce dispositif n'est pas limitatif de l'invention, qui concerne une pompe spéciale, particulièrement utile dans cette application et ce dispositif, mais parfaitement applicable à d'autres.

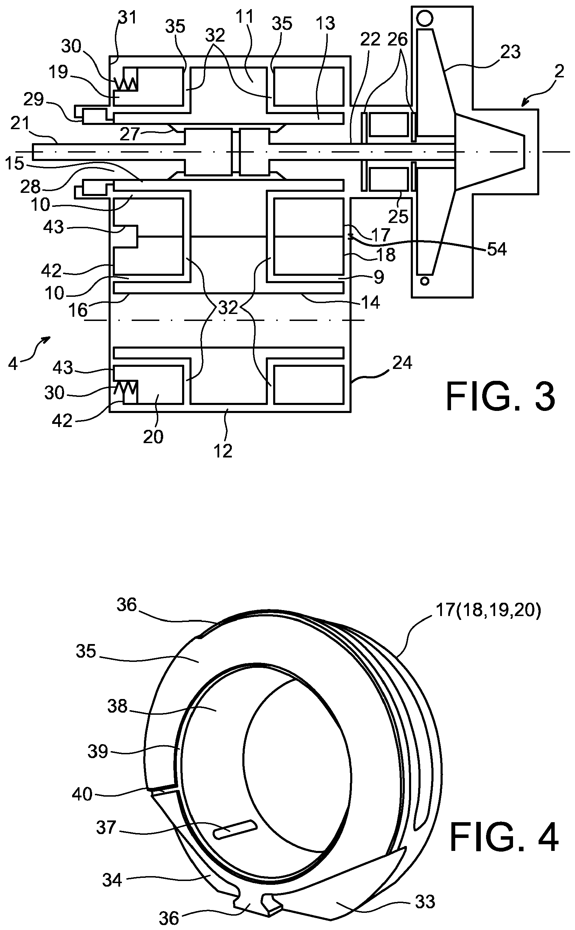

Les figures 2 et 3 sont maintenant commentées.

La figure 2 illustre, en perspective, les portions essentielles de la pompe à haute pression 4 connue et que l'invention doit perfectionner, et la figure 3 est un plan général du dispositif. La pompe à haute pression 4 est une pompe à engrenages, comprenant un pignon menant 11 et un pignon mené 12, engrenant ensemble et refoulant du carburant entre leurs dents pour accomplir le pompage. Chacun des pignons 11 et 12 comprend des queues ou bouts d'axes 13, 14 et 15, 16 à ses deux côtés opposés, dont les premiers, à droite des figures 2 et 3, sont soutenus par des premiers paliers 17, 18 respectifs, dits paliers fixes avec des premiers jeux 9, et les seconds, à gauche sur les figures, sont soutenus par des seconds paliers, dits paliers mobiles 19, 20 avec des seconds jeux 10. Ces paliers 17 à 20 sont tous des paliers lisses, mais les paliers fixes 17 et 18 sont retenus avec un jeu plus réduit dans des logements d'un carter 24 que les paliers mobiles 19 et 20, qui peuvent ainsi se déplacer en direction axiale pour pincer les pignons 11 et 12 et réduire des jeux qui pourraient permettre une recirculation du fluide pompé vers les basses pressions. Le pignon menant 11 est entraîné par un arbre à haute pression 21, et un arbre à basse pression 22 entraîne le rouet 23 de la pompe à basse pression 2. Les pompes 2 et 4 sont toutes deux intégrées dans le carter 24 commun. L'arbre à basse pression 22 est soutenu par un palier 25 supplémentaire dans un alésage du carter 24. Des butées 26 limitent les mouvements axiaux du rouet 23, en s'appuyant sur le palier 25. Le mouvement de l'arbre d'entraînement 21 est communiqué à l'arbre à basse pression 22 par l'intermédiaire de cannelures 27 entre le pignon menant 11 et les extrémités des arbres 21 et 22. Un accouplement des pompes 2 et 4 est ainsi obtenu.

Le bon fonctionnement de la pompe à haute pression 4 dépend d'une étanchéité suffisante entre ses différents éléments : il faut éviter les fuites du fluide pompé vers l'extérieur du carter 24, de même qu'autour des pignons 11 et 12, en recirculation vers l'entrée de la pompe 4. Le carter 24 est ouvert en 28 autour de l'entrée de l'arbre à haute pression 21. Une garniture d'étanchéité 29 est disposée à cet endroit, entre le carter 24 et le bout d'axe 15 adjacent, pour éliminer les fuites vers l'extérieur. Les fuites par recirculation autour des pignons 11 et 12 sont minimisées au moyen de ressorts 30, afin de repousser les paliers mobiles 19 et 20 vers les pignons 11 et 12, ce qu'on appelle un pincement des pignons 11 et 12.

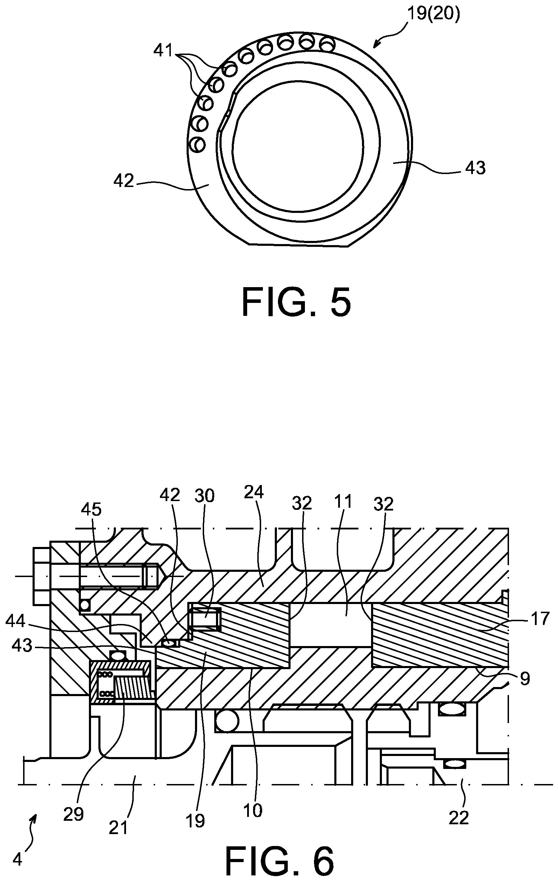

Un autre critère de bon fonctionnement de la pompe à haute pression 4 sera maintenant détaillé au moyen des figures 4 et 5. Les frottements entre les paliers 17 à 20, les pignons 11 et 12 et leurs bouts d'axes 13 à 16 sont évités par des couches fluides de sustentation hydrodynamiques formées par une recirculation du fluide pompe. Chacun des paliers 17 à 20 est creusé de plusieurs reliefs, dont un bassin à haute pression 33 et un bassin à basse pression 34 à la périphérie d'une face axiale intérieure 35 (proche des pignons 11 et 12), de part et d'autre d'un muret de séparation 60. Les bassins 33 et 34 sont en communication respective avec les volumes de fluides adjacents à la sortie et à l'entrée de la pompe 4. Le bassin à haute pression 33 communique à une rainure en arc à haute pression 36, qui débouche sur la face axiale intérieure 35, et, par l'intermédiaire d'un perçage non représenté, à une rainure à haute pression 37, qui débouche dans une face radiale intérieure 38 du palier 17 à 20. Une rainure à basse pression 39 s'étend à la jonction de la face axiale intérieure 35 de la face radiale intérieure 38 et communique au bassin à basse pression 34, par une rainure collectrice 40. Dans les paliers 17 à 20 construits de cette façon, le fonctionnement de la pompe entretient ainsi une circulation de fluide servant à la lubrification dynamique des paliers 17 à 20, depuis le bassin à haute pression 33 jusqu'au bassin à basse pression 34, en créant des couches hydrodynamiques sur la face axiale intérieure 35 et la face radiale intérieure 38. Les bouts d'axes 13 à 16 sont donc soutenus par ces couches hydrodynamiques dans les faces radiales intérieures 38, qui occupent les jeux 9 et 10, et des couches hydrodynamiques sur les faces axiales intérieures 35 se forment contre les flancs des pignons 11 et 12, en les maintenant légèrement séparées des paliers 17 à 20 et empêchant donc la suppression complète des jeux 32, malgré les ressorts 30.

Ainsi que le montre la figure 5, les paliers mobiles 19 et 20 ont encore, dans leur construction connue, une particularité de construction à leur face axiale extérieure, éloignée des pignons 11 et 12 : cette face est divisée en deux portions en forme de croissants 42 et 43, qui sont situées dans des plans différents, séparés par un épaulement muni d'un joint d'étanchéité 45 (visible à la figure 6) qui permet d'exposer le croissant 42 à la haute pression du fluide et le croissant 43 à la basse pression. Les paliers mobiles 19 et 20 sont retenus, à l'endroit de l'épaulement séparant les croissants 42 et 43, dans des alésages 44 du carter 24, excentrés par rapport aux axes de rotation des pignons 11 et 12. Des ressorts 30 comprimés entre les paliers mobiles 19 et 20 et une face 31 du carter 24, adjacente à l'entrée de l'arbre à haute pression 21, peuvent être installés seulement où le croissant 42 est le plus large, sur un quart de circonférence environ des paliers mobiles 19 et 20. La poussée en direction axiale est alors déséquilibrée et comporte un moment autour d'un axe transversal des paliers mobiles 19 et 20, afin d'équilibrer un moment opposé produit par les différences de pression du fluide pompé sur les faces axiales intérieures 35 : aucun basculement des paliers mobiles 19 et 20 autour de cet axe transversal n'est donc produit, de sorte qu'ils restent bien coaxiaux aux bouts d'axes 15 et 16 qu'ils soutiennent, malgré les jeux de montage des paliers mobiles 19 et 20 dans le carter 24.

Les forces de pression s'exerçant sur les éléments jouant à l'intérieur de la pompe (les paliers mobiles 19 et 20, ainsi que les pignons 11 et 12 et leurs bouts d'axes) peuvent être détaillées principalement comme ceci. La différence de pression entre l'entrée et la sortie de la pompe déplace les pignons 11 et 12 vers le côté d'entrée du fluide, en les approchant du carter 24 et en exerçant une charge transversale sur les bouts d'axes 13 à 16. La pression plus forte s'exerçant sur la face axiale extérieure des paliers mobiles 19 et 20, principalement sur le croissant 42 exposé à la haute pression, repousse les paliers mobiles 19 et 20 vers les pignons 11 et 12 et les comprime sur les paliers 17 et 18, en laissant seulement subsister une largeur réduite des jeux 32 autour des pignons 11 et 12, qui sont maintenus par la recirculation du fluide sur les faces axiales intérieures 35. De plus, la dissymétrie de ces faces axiales extérieures due à l'irrégularité des croissants 42 et 43 fait que la pression du fluide exerce une composante de mouvement de basculement sur les paliers mobiles 19 et 20, qui compense un mouvement de basculement opposé produit par la pression irrégulière du fluide sur les faces axiales intérieures adjacentes aux pignons 11 et 12 : cet équilibre des mouvements de basculement autorise le glissement des paliers mobiles 19 et 20 sans frottement excessif dans le carter 24 et assure donc leur mobilté.

Les ressorts 30, qui contribuent aussi au pincement des pignons 11 et 12 sont utiles au démarrage de la pompe 4, quand aucune différence de pression n'y est encore créée ; les efforts qu'ils produisent sont ensuite trop faibles pour exercer une influence réelle.

La pompe à haute pression 4 a donc un fonctionnement en général satisfaisant, mais qui dépend d'une élévation de pression suffisante pour assurer la lubrification des paliers 17 à 20 et le maintien de la sustentation hydrodynamique des bouts d'axe 13 à 16 malgré les oscillations de fonctionnement, et aussi pour réduire les recirculations néfastes autour des pignons 11 et 12. Une autre faiblesse possible est redevable à la garniture d'étanchéité 29, responsable de l'obturation du carter 24. La réalisation de l'invention, qui va maitenant être décrite à titre purement illustratif, offre par contre un fonctionnement satisfaisant, même si la surpression à ses bornes est faible ou nulle. On décrira l'invention au moyen de modifcations qu'on apporte à la pompe à haute pression 4. La pompe à haute pression modifiée, caractéristique de l'invention, sera référencée par 4'.

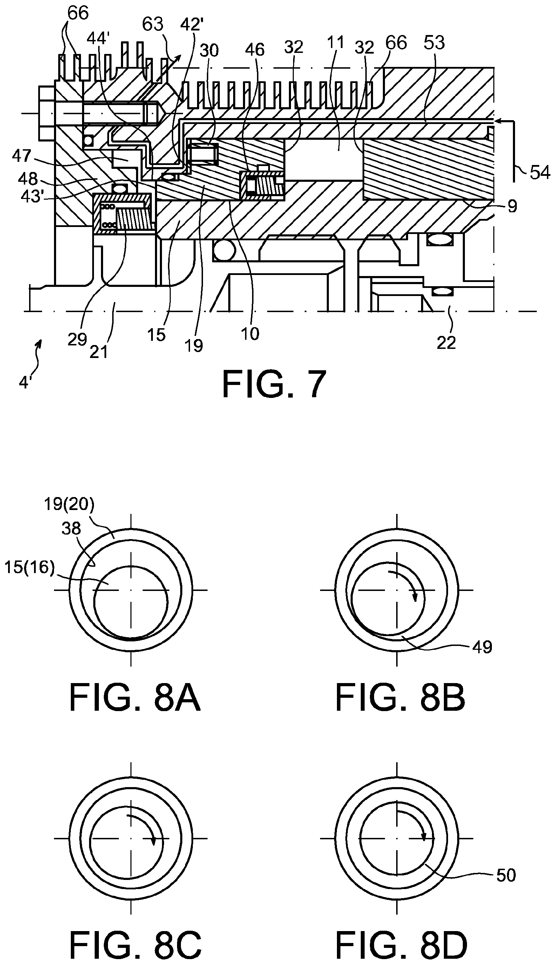

Se reportant à la figure 7, on voit tout d'abord qu'une deuxième garniture d'étanchéité 46 a été ajoutée, entre le palier mobile 19 et le pignon menant 11, de manière à interrompre le jeu axial 32 à cet endroit. La deuxième garniture d'étanchéité 46 consiste en un boîtier contenant un ressort qui repousse une lèvre assurant l'étanchéité : le boîtier est ici dans un logement du palier mobile 19, et la lèvre frotte contre une glace du pignon 11. Sans qu'on représente l'agencement, puisqu'il est semblable, une garniture d'étanchéité semblable est disposée à un endroit correspondant, entre le palier mobile 20 et le pignon mené 12. On voit qu'une cavité close 47 est formée, délimitée par le carter 24, le palier mobile 19 ou 20, la garniture d'étanchéité 46, le pignon 11 ou 12, le bout d'axe 15 ou 16, et un flasque 48, appartenant au carter 24, et servant à insérer la garniture d'étanchéité 29. Dans le cas du palier mobile 20 et du pignon mené 12, il en va de même en l'absence de la garniture d'étanchéité 29 et du flasque 48, puisque le carter 24 est continu à cet endroit.

Voici pourquoi les cavités closes 47 ont été créées. Un jeu radial relativement important existe entre les bouts d'axes 13 à 16 et les paliers 17 à 20, l'agencement au repos étant représenté à la figure 8A, où les bouts d'axe 13 à 16 sont posés au fond des faces radiales intérieures 38. A mesure que la pompe à haute pression 4' est mise en marche, un coin hydrodynamique 49 se crée sur les bouts d'axes 13 à 16 (figure 8B), les détache complètement de la face radiale intérieure 38 quand la vitesse de rotation est suffisante (figure 8C), et les bouts d'axe 13 à 16 sont au centre des paliers 17 à 20 à grande vitesse, le coin hydrodynamique ayant été remplacé par une couche hydrodynamique 50 d'épaisseur uniforme (figure 8D). La formation de ce coin hydrodynamique 49 puis de cette couche hydrodynamique 50 dépend toutefois des propriétés du fluide : il se forme facilement avec les fluides les plus habituels (newtoniens), comme les carburants, seulement à pression élevée. La couche hydrodynamique 50 ne peut donc plus se former facilement si le fluide reste à peu près à la même pression entre l'entrée et la sortie de la pompe à haute pression 4'. Les oscillations auxquelles les pignons 11 et 12 sont soumis tendent alors à maintenir l'état défavorable de la figure 8B, où les paliers 17 à 20 sont exposés à des dommages par chocs, même aux grandes vitesses de rotation.

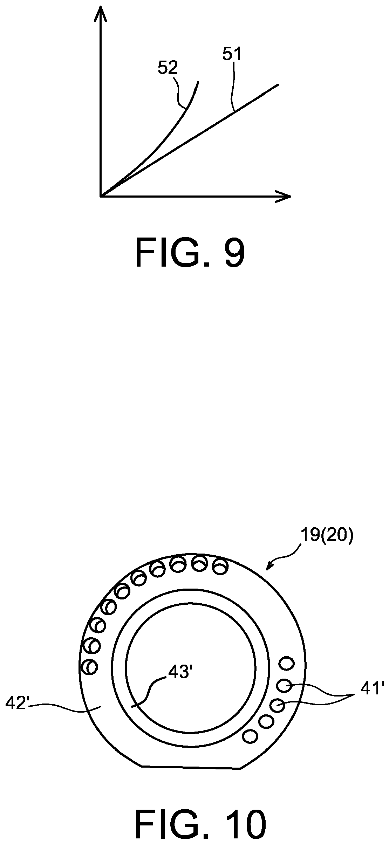

C'est pourquoi on ne recourt plus au fluide pompé pour la formation et l'entretien de la couche hydrodynamique 50, mais à un fluide particulier, qui est injecté au préalable dans les cavités closes 47 : un fluide non newtonien dit rhéo-épaississant, c'est-à-dire dont la viscosité augmente en fonction du taux de cisaillement. Ainsi que l'indique la figure 9, où les taux de cisaillement sont en abscisses et les contraintes de cisaillement sont en ordonnées, les fluides newtoniens suivent une droite 51, dont la pente (la viscosité du fluide) est constante, quel que soit le taux de cisaillement. Les fluides rhéo-épaississants, quant à eux, suivent une courbe 52, dont la pente devient de plus en plus forte à mesure que le taux de cisaillement augmente, et ont donc une viscosité de plus en plus grande quand ils sont sollicités au cisaillement. De tels fluides comprennent, par exemple, des huiles chargées en impuretés, comme des fibres organiques. Leur viscosité, plus grande quand les taux de cisaillement sont élevés, leur permet de donner facilement la sustentation hydrodynamique. Or ces conditions de taux de cisaillement élevés sont toujours réunies dans la situation présente, puisqu'elles existent dans le coin hydrodynamique 49, au début de la rotation ou en cas d'oscillations, puisque le gradient de vitesse est important, à cause de la faible épaisseur de ce coin ; et le taux de cisaillement est aussi important aux vitesses de rotation élevées, une fois que la couche hydrodynamique 50 a été formée. Il suffit de prévoir ce fluide particulier pour deux des paliers 17 à 20 seulement, comme les paliers mobiles 19 et 20, les paliers fixes 17 et 18 continuant à bénéficier de la sustentation par le fluide pompé. Il est en effet imposé une sustentation hydrodynamique par recirculation avec ce genre de pompe à cause de sa fiabilité, puisqu'une lubrification suffisante est garantie tant que la pompe à haute pression 4' fonctionne et est alimentée. On a toutefois constaté qu'elle pouvait l'être sur un seul palier par pignon 11 ou 12, ce qui explique cette disposition où la cavité close 47 est prévue seulement du côté des paliers mobiles 19 et 20. La sustentation hydrodynamique classique par recirculation est donc sauvegardée pour les paliers fixes 17 et 18. La sustentation accomplie par le fluide des cavités closes 47 a au contraire un rôle prépondérant d'amortissement des oscillations aux fonctionnements irréguliers. Il est à noter qu'une disposition inverse pourrait être adoptée, c'est-à-dire que les cavités closes 37 pourraient être du côté des paliers fixes 17 et 18.

D'autres aspects de l'invention vont maintenant être exposés. Leur utilité apparaît dans les situations où la surpression entre la sortie et l'entrée de la pompe à haute pression 4' devient faible, voire nulle.

On se reporte à la figure 10, pour développer l'explication d'un deuxième aspect de l'invention. L'effort de pincement des pignons 11 et 12 en direction axiale risque de devenir insuffisant en l'absence de surpression. On y remédie en disposant des ressorts 30 supplémentaires, semblables aux précédents, dans autant de nouveaux alvéoles 41', établis sur un secteur de la circonférence du palier mobile 19 ou 20 opposé en secteur recevant les alvéoles 41. Cela implique de modifier l'alésage excentré 44 existant, en le remplaçant par un alésage 44' concentrique à l'axe du palier 19 ou 20. Les portions 42' et 43' soumises à la haute pression et à la basse pression de la face axiale extérieure des paliers mobiles 19 et 20 sont dorénavant concentriques. Le pincement des pignons 11 et 12 est donc assuré essentiellement ou même complètement par les ressorts 30, ce qui n'est pas dommageable malgré la faiblesse de ces ressorts, puisque la différence de pression suscitant la recirculation autour des pignons 11 et 12 dans les jeux 32 n'est plus importante et qu'un faible effort de pincement suffit maintenant à la contrecarrer. De même, il n'y a plus de raison d'exercer un moment autour d'un axe transversal sur les paliers mobiles 19 et 20, puisqu'ils ne sont plus soumis à un basculement dû aux forces de pression sur leurs faces axiales intérieures 38.

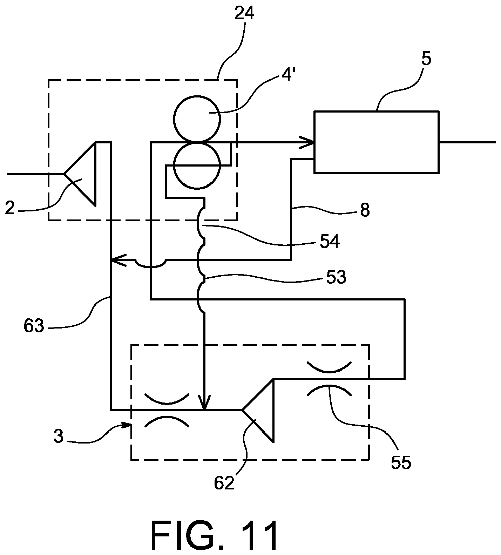

L'affaiblissement de la surpression aux bornes de la pompe à haute pression 4 peut, s'il est excessif, être impuissant à assurer la recirculation dans les paliers fixes 17 et 18. La recirculation classique, du côté de sortie au côté d'entrée de la pompe, est alors remplacée par une recirculation extérieure, conformément à un troisième aspect important de l'invention représenté à la figure 11. On procède alors en disposant une canalisation 53 entre un piquage 54 du carter 24, du côté des faces axiales extérieures des paliers fixes 17 et 18, éloignées des pignons 11 et 12, et un point du circuit du carburant en amont de la pompe à haute pression 4', soumis à une pression moins importante, par exemple en amont d'une pompe de gavage 62 qu'on peut ajouter au dispositif en aval de la pompe à basse pression 2 pour suppléer à l'élévation de pression fournie par la pompe à haute pression 4 connue. Cette pompe de gavage 62 est située par exemple en amont du filtre 55 des filtres et échangeurs 3. Le conduit de fluide passant successivement par la pompe à basse pression 2, la pompe de gavage 62, et la pompe à haute pression 4' porte la référence 63. La pompe à haute pression 4' délivrant seulement un débit, mais sans ajouter de pression supplémentaire.

Les paliers associés aux cavités closes 37, ici les paliers mobiles 19 et 20, sont dépourvus des bassins, rainures, etc., représentés à la figure 4, puisqu'ils ne sont pas sujets à une sustentation par le fluide pompé : ils peuvent avoir une forme cylindrique régulière, mais éventuellement être pourvus de rainures faisant communiquer plus largement les cavités closes 47 et les interfaces avec les bouts d'axes 15 et 16. Les paliers fixes 17 et 18 pourront être modifiés aussi dans le cas de la recirculation extérieure de la figure 11, la rainure collectrice 40 menant par exemple directement au piquage 54 du carter 24.

Une autre considération concerne la garniture d'étanchéité 29 menant à l'extérieur. Le fluide des cavités closes 47 sera en général à une pression modérée, inférieure à celle du fluide pompé au régime de croisière de l'appareil. La garniture d'étanchéité 29 sera donc moins chargée et moins sujette à des fuites. Si des fuites se produisaient tout de même, elles seraient probablement moins dangereuses que des fuites de carburant. D'autre part, des fuites opposées, vers la chambre 24, sont exclues, puisque le carburant est à une pression supérieure. De toute façon, la viscosité plus grande du fluide des cavités closes 47 rend les fuites plus difficiles.

Des ailettes 66 peuvent être ajoutées au carter 24 près des cavités closes 47, de plus la canalisation 53 de retour du carburant vers la pression modérée peut circuler autour desdites cavités closes 47, afin de renforcer l'évacuation de la chaleur qui est produite par leur contenu dans l'air ambiant ou dans le carburant en recirculation. Ces deux conceptions sont représentées ensemble à la figure 7 : à partir du piquage 54, la canalisation 53 est donc d'abord creusée dans le carter 24 et passe à proximité des cavités closes 47, en serpentant éventuellement autour d'elles, avant de sortir du carter 24. La canalisation 53 peut être intégrée au carter 24, usinée par perçage, ou formée en assemblant plusieurs parties du carter 24. La longueur de la canalisation 53 dans le carter 24 peut être augmentée pour y dissiper plus de chaleur, avant que le carburant en recirculation ne rejoigne le conduit de fluide 63. Les ailettes 66 peuvent être ajoutées sur toute la surface extérieure du carter 24, et aussi avoir une densité plus grande près des cavités closes 47. On en a représenté ici sur toute la surface du carter 24 à partir du droit des pignons 11 et 12, la face plane du flasque 48 en étant toutefois dépourvue.

La pompe de l'invention permettra donc d'améliorer le fonctionnement des circuits d'alimentation en carburant existants, en s'intégrant facilement à eux, seules des modifications mineures étant nécessaires, sans les compliquer beaucoup et avec une grande fiabilité.

L'invention resterait applicable à des pompes dont les premiers paliers ou paliers fixes 17 et 18, de même que les seconds paliers ou paliers mobiles 19 et 20, seraient solidaires l'un de l'autre, et réunis par une entretoise, les paliers mobiles 19 et 20 se déplaçant alors ensemble.

## Revendications

1. Pompe à engrenages (4') à carburant, comprenant un carter (24), deux pignons (11, 12) engrenant entre eux dans une chambre du carter, deux premiers paliers (17, 18), soutenant respectivement des premiers bouts d'axes (13, 14) des pignons, deux seconds paliers (19, 20), soutenant respectivement des seconds bouts d'axes (15, 16) des pignons, les premiers paliers et les seconds paliers étant logés dans la chambre du carter, les premiers bouts d'axes tourillonnant dans les premiers paliers (17, 18) avec des premiers jeux (9) et les seconds bouts d'axes tourillonnant dans les seconds paliers (19, 20) avec des seconds jeux (10), les premiers et les seconds jeux accueillant des couches de fluide de support hydrodynamique, **caractérisée en ce qu'**elle comprend des garnitures d'étanchéité (46) entre les seconds paliers (19, 20) et les pignons (11, 12), lesdites garnitures isolant des cavités closes (47) englobant les seconds jeux (10) et délimitées par le carter (24), les seconds paliers (19, 20) et les pignons (11, 12), les cavités closes contenant un fluide ayant une viscosité plus grande qu'un fluide, qui est un carburant, pompé par les pignons.

2. Pompe à engrenages suivant la revendication 1, **caractérisée en ce que** le fluide des cavités closes (47) est rhéo-épaississant.

3. Pompe à engrenages suivant l'une quelconque des revendications 1 ou 2, **caractérisée en ce que** soit les premiers paliers, soit les seconds paliers sont mobiles dans le carter (24) en direction axiale des bouts d'axes des pignons, et repoussés vers les pignons par des ressorts (30) comprimés sur le carter (24).

4. Pompe à engrenages suivant la revendication 3, **caractérisée en ce que** les ressorts s'étendent sur des secteurs opposés de circonférence de faces axiales extérieures des paliers mobiles.

5. Pompe à engrenages selon l'une quelconque des revendications 1 à 4, **caractérisée en ce que** le carter (24) comporte une garniture d'étanchéité (29) à une ouverture, la garniture d'étanchéité entourant un arbre (21) de la pompe, et donnant sur une des cavités closes (47).

6. Pompe à engrenages suivant l'une quelconque des revendications 1 à 5, **caractérisée en ce que** les couches de sustentation hydrodynamiques des premiers jeux (9) sont formées par des dispositifs de recirculation du fluide pompé par la pompe (4'), lesdits dispositifs (33-40 ; 54) passant par lesdits premiers jeux (9).

7. Pompe à engrenages selon la revendication 6, **caractérisée en ce que** le carter comprend un piquage (54) faisant communiquer les premiers jeux (9) et l'extérieur du carter (24).

8. Pompe à engrenages selon l'une quelconque des revendications 1 à 7, **caractérisée en ce qu'**elle comprend des ailettes (66) de dissipation de chaleur sur le carter (24), au moins devant les cavités closes (47).

9. Dispositif de pompage comprenant une pompe à engrenages suivant l'une quelconque des revendications 1 à 8 et une autre pompe (2), comprise aussi dans le carter (24), la pompe à engrenages (4') et ladite autre pompe étant accouplées en ayant des arbres d'entraînement (21, 22) reliés entre eux.

10. Dispositif de pompage suivant la revendication 9, **caractérisé en ce que** la pompe à engrenage est une pompe à haute pression de carburant, ladite autre pompe (2) est une pompe à basse pression de carburant, et le dispositif comprend un circuit de fluide reliant une sortie du carburant de la pompe à basse pression à une entrée du carburant de la pompe à engrenages.

11. Dispositif de pompage selon la revendication 10, la pompe à engrenages étant conforme à la revendication 7, **caractérisé en ce qu'**il comprend une canalisation (53) du fluide reliant le piquage (54) au circuit de fluide entre ladite sortie du carburant de la pompe à basse pression et ladite entrée du carburant.

12. Dispositif de pompage selon la revendication 11, **caractérisé en ce que** la canalisation (53) comprend une portion interne au carter et passant près des cavités closes (47).

13. Dispositif de pompage comprenant une pompe à engrenages (4') suivant l'une quelconque des revendications 1 à 8, la pompe à engrenages étant une pompe à haute pression, le dispositif comprenant encore une pompe à basse pression (2), et un conduit (63) de fluide passant par la pompe à basse pression (2) et la pompe à haute pression (4').

14. Dispositif de pompage suivant la revendication 13, **caractérisé en ce qu'**il comprend en outre une pompe de gavage (62), par laquelle le conduit (63) passe en aval de la pompe à basse pression (2), le carter (24) comprenant des piquages (54) faisant communiquer les premiers jeux (9) et l'extérieur du carter (24), et les piquages étant reliés à une canalisation (53) aboutissant au conduit (63) en amont de la pompe de gavage (62).

## Patentansprüche

1. Kraftstoffgetriebepumpe (4'), umfassend ein Gehäuse (24), zwei miteinander in Eingriff stehende Zahnräder (11, 12) in einer Gehäusekammer, zwei erste Lager (17, 18), die jeweils erste Achszapfen (13, 14) der Zahnräder abstützen, zwei zweite Lager (19, 20), die jeweils zweite Achszapfen (15, 16) der Zahnräder abstützen, wobei die ersten Lager und die zweiten Lager in der Gehäusekammer untergebracht sind, die ersten Achszapfen in den ersten Lagern (17, 18) mit ersten Spielen (9) drehbar gelagert sind und die zweiten Achszapfen in den zweiten Lagern (19, 20) mit zweiten Spielen (10) drehbar gelagert sind, die ersten und die zweiten Spiele Schichten einer Flüssigkeit zur hydrodynamischen Abstützung aufnehmen, **dadurch gekennzeichnet, dass** sie zwischen den zweiten Lagern (19, 20) und den Zahnrädern (11, 12) Dichtungen (46) umfasst, wobei die Dichtungen geschlossene Hohlräume (47) isolieren, welche die zweiten Spiele (10) einschließen und vom Gehäuse (24), den zweiten Lagern (19, 20) und den Zahnrädern (11, 12) begrenzt werden, wobei die geschlossenen Hohlräume eine Flüssigkeit mit einer Viskosität enthalten, die größer als diejenige einer von den Zahnrädern gepumpten Flüssigkeit ist, bei der es sich um einen Kraftstoff handelt.

2. Getriebepumpe gemäß Anspruch 1, **dadurch gekennzeichnet, dass** die Flüssigkeit der geschlossenen Hohlräume (47) ein Rheo-Verdicker ist.

3. Getriebepumpe gemäß einem der Ansprüche 1 oder 2, **dadurch gekennzeichnet, dass** entweder die ersten Lager oder die zweiten Lager in Axialrichtung der Achszapfen der Zahnräder im Gehäuse (24) beweglich sind und von auf dem Gehäuse (24) zusammengedrückten Federn (30) in Richtung der Zahnräder gedrückt werden.

4. Getriebepumpe gemäß Anspruch 3, **dadurch gekennzeichnet, dass** sich die Federn auf gegenüberliegenden Umfangsabschnitten der äußeren Axialflächen der beweglichen Lager erstrecken.

5. Getriebepumpe gemäß einem der Ansprüche 1 bis 4, **dadurch gekennzeichnet, dass** das Gehäuse (24) an einer Öffnung eine Dichtung (29) aufweist, wobei die Dichtung eine Welle (21) der Pumpe umgibt und sich an einem der geschlossenen Hohlräume (47) befindet.

6. Getriebepumpe gemäß einem der Ansprüche 1 bis 5, **dadurch gekennzeichnet, dass** die Schichten zum hydrodynamischen Anheben der ersten Spiele (9) von Vorrichtungen zur Rückführung der durch die Pumpe (4') gepumpten Flüssigkeit gebildet werden, wobei die Vorrichtungen (33-40; 54) durch die ersten Spiele (9) verlaufen.

7. Getriebepumpe gemäß Anspruch 6, **dadurch gekennzeichnet, dass** das Gehäuse eine Abzweigung (54) umfasst, welche die ersten Spiele (9) und das Äußere des Gehäuses (24) verbindet.

8. Getriebepumpe gemäß einem der Ansprüche 1 bis 7, **dadurch gekennzeichnet, dass** sie zumindest vor den geschlossenen Hohlräumen (47) Wärmeableitungsrippen (66) auf dem Gehäuse (24) umfasst.

9. Pumpvorrichtung, umfassend eine Getriebepumpe gemäß einem der Ansprüche 1 bis 8 und eine weitere Pumpe (2), die ebenfalls im Gehäuse (24) enthalten ist, wobei die Getriebepumpe (4') und die weitere Pumpe gekoppelt sind, indem sie über Antriebswellen (21, 22) miteinander verbunden sind.

10. Pumpvorrichtung gemäß Anspruch 9, **dadurch gekennzeichnet, dass** es sich bei der Getriebepumpe um eine Hochdruckkraftstoffpumpe handelt, dass die weitere Pumpe (2) eine Niederdruckkraftstoffpumpe ist und dass die Vorrichtung einen Flüssigkeitskreislauf umfasst, der einen Kraftstoffauslass der Niederdruckpumpe mit einem Kraftstoffeinlass der Getriebepumpe verbindet.

11. Pumpvorrichtung gemäß Anspruch 10, wobei die Getriebepumpe Anspruch 7 entspricht, **dadurch gekennzeichnet, dass** sie eine Flüssigkeitsleitung (53) umfasst, welche die Abzweigung (54) mit dem Flüssigkeitskreislauf zwischen dem Kraftstoffauslass der Niederdruckpumpe und dem Kraftstoffeinlass verbindet.

12. Pumpvorrichtung gemäß Anspruch 11, **dadurch gekennzeichnet, dass** die Leitung (53) einen Abschnitt innerhalb des Gehäuses umfasst, der nahe den geschlossenen Hohlräumen (47) verläuft.

13. Pumpvorrichtung, umfassend eine Getriebepumpe (4') gemäß einem der Ansprüche 1 bis 8, wobei es sich bei der Getriebepumpe um eine Hochdruckpumpe handelt, wobei die Vorrichtung darüber hinaus eine Niederdruckpumpe (2) und eine Flüssigkeitsleitung (63) umfasst, die durch die Niederdruckpumpe (2) und die Hochdruckpumpe (4') verläuft.

14. Pumpvorrichtung gemäß Anspruch 13, **dadurch gekennzeichnet, dass** sie außerdem eine Förderpumpe (62) umfasst, durch welche die Leitung (63) stromabwärts von der Niederdruckpumpe (2) verläuft, wobei das Gehäuse (24) Abzweigungen (54) umfasst, welche die ersten Spiele (9) und das Äußere des Gehäuses (24) verbinden, und wobei die Abzweigungen mit einer Leitung (53) verbunden sind, welche stromaufwärts von der Förderpumpe (62) in die Leitung (63) mündet.

## Claims

1. Gear fuel pump (4') comprising a housing (24), two pinions (11, 12) meshing with each other in a chamber of the housing, two first bearings (17, 18) each supporting one of two first stubshafts (13, 14) of the pinions, two second bearings (19, 20) each supporting one of two second stubshafts (15, 16) of the pinions, the first bearings and the second bearings being housed in the chamber in the case, the first stubshafts turning in the first bearings (17, 18) with first gaps (9) and the second stubshafts turning in the second bearings (19, 20) with second gaps (10), the first and the second gaps containing fluid hydrodynamic lift layers, **characterised in that** it comprises gland packings (46) between the second bearings (19, 20) and the gearwheels (11, 12), said packings isolating closed cavities (47) comprising the second gaps (10) and delimited by the case (24), the second bearings (19, 20) and the pinions (11, 12), the closed cavities containing a fluid having a greater viscosity than a fluid, that is a fuel, pumped by the pinions.

2. Gear pump according to claim 1, **characterised in that** the fluid in the closed cavities (47) is rheo-thickening.

3. Gear pump according to any one of claims 1 or 2, **characterised in that** either the first bearings or the second bearings are free to move in the case (24) along an axial direction of the pinion stubshafts and are pushed towards the pinions by compressed springs (30) onto the case (24).

4. Gear pump according to claim 3, **characterised in that** the springs extend over opposite sectors on circumference of outer axial faces of the mobile bearings.

5. Gear pump according to any one of claims 1 to 4, **characterised in that** the carter (24) comprises a gland packing (29) at one opening, the gland packing surrounding a pump shaft (21) and opening up onto one of the closed cavities (47).

6. Gear pump according to any one of claims 1 to 5, **characterised in that** the hydrodynamic lift layers of the first gaps (9) are composed of recirculation means of the fluid pumped by the pump (4'), said devices (33-40; 54) passing through said first gaps (9).

7. Gear pump according to claim 6, **characterised in that** the casing includes a tapping (54) making the first gaps (9) communicate with outside the case (24).

8. Gear pump according to any one of claims 1 to 7, **characterised in that** it comprises heat dissipation fins (66) on the case (24), at least in front of the closed cavities (47).

9. Pumping device comprising a gear pump according to any one of claims 1 to 8, and another pump (2) also contained in the casing (24), the gear pump (4') and said other pump being coupled in having drive shafts (21, 22) connected to each other.

10. Pumping device according to claim 9, **characterised in that** the gear pump is a high pressure fuel pump, said other pump (2) is a low pressure fuel pump, and the device comprises a fluid circuit connecting a fuel outlet of the low pressure pump to a fuel inlet of the gear pump.

11. Pumping device according to claims 10, the gear pump being like in claim 7, **characterised in that** it comprises a conduit (53) for the fluid, connecting the tapping (54) to the fluid circuit between said fuel outlet of the low pressure pump and said fuel inlet.

12. Pumping device according to claim 11, **characterised in that** the conduit (53) comprises a portion internal to the case and passing close to the closed cavities (47).

13. Pumping device comprising a gear pump (4') according to any one of claims 1 to 8, the gear pump being a high pressure pump, the device also including a low pressure pump (2), and a fluid conduit (63) passing through the low pressure pump (2) and the high pressure pump (4').

14. Pumping device according to claim 13, **characterised in that** it also comprises a feed pump (62), through which the conduit (63) passes downstream from the low pressure pump (2), the case (24) including tappings (54) that make the first gaps (9) communicate with outside the case (24), and the tappings being connected to another conduit (53) leading to the conduit (63) upstream from the feed pump (62).
